Europäisches Patentamt

**European Patent Office**

**Office européen des brevets**

(19)

(11) Publication number:

**0 078 650**
**A1**

(12)
# EUROPEAN PATENT APPLICATION

(21) Application number: **82305656.9**

(22) Date of filing: **25.10.82**

(51) Int. Cl.³: **A 23 F 5/18**

---

(30) Priority: **04.11.81 US 318090**

(43) Date of publication of application: **11.05.83**
**Bulletin 83/19**

(84) Designated Contracting States: **DE FR GB IT SE**

(71) Applicant: **GENERAL FOODS CORPORATION, 250 North Street, White Plains, N.Y. 10625 (US)**

(72) Inventor: **Hamell, Matthew, 26, Cypress Lane, Orangeburg N.Y. 10968 (US)**
Inventor: **Zanno, Paul Robert, 491, Sierra Vista Lane, Valley Cottage N.Y. 10989 (US)**
Inventor: **Hickernell, Gary Lee, 12, Terrich Court, Ossining N.Y. 10562 (US)**

(74) Representative: **Baillie, Iain Cameron et al, c/o Ladas & Parry Isartorplatz 5, D-8000 München 2 (DE)**

(54) **Process for improving hydrolysis coffee extract.**

(57) A hydrolyzed coffee extract is contacted with a polymeric resin for adsorption of the harsh, bitter and metallic notes characteristic of such an extract. The polymeric resin is of the porous polyacrylamide polymer type. The hydrolysis coffee extract thereby upgraded may be combined with an atmospheric extract or a conventional commercial coffee extract and dried, producing a high yield, good tasting soluble coffee product.

**EP 0 078 650 A1**

- 1 -

DESCRIPTION

PROCESS FOR IMPROVING HYDROLYSIS COFFEE EXTRACT

Technical Field

This invention relates to a process for upgrading a hydrolyzed coffee extract by chromatographic separation of the off-flavors from the hydrolysis extract. More particularly, the invention involves removing the characteristic bitter, harsh and metallic undesirable off-flavor compounds of hydrolyzed coffee extract by contact with a polymeric resin.

Background Art

It is well known that two mechanisms are involved in the commercial extraction of roasted coffee. Atmospheric extraction is the mechanism wherein the water soluble constituents of roasted coffee are extracted from the coffee particle at about atmospheric pressure and a temperature typically less than 100°C. The flavor of atmospheric extract is roughly equivalent to that obtained from a home brew of roasted and ground coffee. The drawback of such an extract from a commercial standpoint is that the yield of coffee solids is only approximately 20% by weight of the original coffee charge.

The yield of coffee solids may be increased to roughly 50% by weight of the original coffee charge through hydrolysis, which is the second extraction mechanism. Hydrolysis is the solubilization of otherwise insoluble starches and celluloses present in roasted coffee by extraction at a temperature of at least 175°C and at an elevated pressure. A hydrolyzed coffee extract exhibits characteristic undesirable off-flavor bitter, harsh and metallic notes. The presence of hydrolyzed coffee solids in a conventional commercial coffee extract may introduce the undesirable off-flavor notes into the overall flavor of said commercial extract.

Methods of lessening the adverse impact of certain off-flavors introduced in soluble coffee extract production are known, but such prior art methods do not focus on removing the undesirable flavors from the hydrolyzed coffee solids. For instance, U.S. Patent No. 2,888,349 to Morrow et al. and U.S. Patent No. 3,458,320 to Niven both involve producing coffee extracts by each of the two extraction mechanisms hereinbefore described. However, it is the object of both inventions to work only with the atmospheric extract for lessening of the off-flavors prior to combination with the untreated hydrolysis extract.

The art also discloses the use of an adsorbent for the removal of aromatic organic compounds from an aqueous coffee extract in U.S. Patent No. 3,418,134 to Rooker and U.S. Patent No. 3,531,463 to Kleeman et al. Similarly, German Patent Application No. DT24 52 693 describes the use of a macroreticular cross-linked resin to recover aroma substances from tomato concentrate and cocoa butter. So too, U.S. Patent No. 4,031,251 to Margolis et al. discloses use of such a resin to trap caffeine and other coffee substances from a coffee extract. The object of this prior art is the adsorption of certain compounds to effect separation from an extract.

0078650

- 3 -

The present invention is directed towards trapping undesirable off-flavor constituents from a hydrolysis extract by chromatographic separation thereby upgrading the flavor and improving the value of said hydrolyzed coffee extract.

## Disclosure of the Invention

A process for the upgrading of hydrolyzed coffee extract has now been discovered wherein said hydrolysis extract is contacted with a polymeric resin which resin effects a chromatographic separation of the bitter, harsh and metallic undesirable off-flavor compounds and the desirable hydrolyzed coffee solids.

The type of polymeric resin that is suitable for meeting the objects of the invention is a porous polyacrylamide polymer resin. Such a resin is known in the art and is available commercially as, for example, Bio-Gel P-2 resin produced by Bio-Rad Laboratories of Richmond, California. This type of resin is generally produced by the copolymerization of acrylamide and N, N´-methylene-bis-acrylamide. The resin disclosed herein is of the polyacrylamide gel type which finds wide application in electrophoresis.

Porous polyacrylamide polymer resins are of the size separation or exclusion type wherein a mixture of compounds is separated by molecular size. The smaller molecules are more easily trapped in the smaller pores of said resin whereby the smaller molecules travel more slowly through a bed of the resin.

In the embodiment of this invention, a hydrolyzed coffee extract is contacted with a bed of resin such that all of the hydrolyzed coffee solids are adsorbed .

- 4 -

onto the resin. However, as the undesirable off-flavor compounds are smaller, said compounds travel more slowly down the bed of resin. This, in turn, leads to the formation of two different colored bands of material adsorbed onto the resin bed, one of which is the undesirable off-flavor compounds and the other of which is the upgraded hydrolyzed coffee solids. Water may then be contacted with the porous polyacrylamide polymer resin to elute each of the bands separately. The hydrolyzed coffee solids are large carbohydrates which elute fairly quickly from said resin, and comprise the first band eluted by the pure water. The second band eluted from the resin consists of the undesirable off-flavor compounds which band is simply discarded after elution. An advantage of this operation is the regeneration of the resin at the same time the upgraded hydrolyzed coffee extract is recovered.

The polyacrylamide resin is generally available in granular form which granules are of from 50 mesh (U.S. Standard Sieve Screen) to 400 mesh. The preferred size for the resin granules is between 50 mesh and 100 mesh.

Contact of the hydrolyzed coffee extract and the polyacrylamide resin may be in any vessel providing good solid-liquid contact. The preferred scheme involves charging a column with a bed of resin, which column has a length between 10 and 50 times its width. The hydrolysis extract is then contacted with the resin bed by introducing the hydrolysis extract at the top of the column and passing said extract downward through the bed of resin.

The temperature range between which the contact may take place is from 4°C to 80°C. It is convenient for the contact to be carried out at ambient temperature since that temperature is effective and requires no energy input to alter the temperature of the hydrolyzed coffee extract.

The present invention has been found to work over a wide range of concentrations of the hydrolyzed coffee extract. Said concentration should not exceed 10% by weight hydrolysis solids, because the presence of the excessive hydrolysis solids hinders the chromatographic effect of the resin. On the other hand, 1% by weight hydrolysis solids is the lower limit below which the invention is not very practical.

The weight ratio of hydrolyzed coffee solids to the weight of the resin bed is important in obtaining sufficient upgrading of said extract. A weight ratio of .01 kg. hydrolysis solids/1 kg. polyacrylamide resin works well but, it has been found that up to .1 kg. hydrolysis solids/1 kg. polyacrylamide resin may be used while still meeting the objects of the invention. It is desirable to use a ratio towards the lower range to insure a margin of operating safety.

The utility of the upgraded hydrolyzed coffee extract is in its combination with other coffee extracts. For instance, the upgraded hydrolysis extract may be combined with an atmospheric extract hereinbefore described. The resulting combination is a coffee extract which has the excellent flavor of the atmospheric extract but which also has the high yield demanded of a commercial coffee operation.

Similarly, hydrolyzed coffee extract may be obtained by the acid hydrolysis of spent coffee grounds, upgraded and then combined with a conventional commercial coffee extract containing both hydrolysis and atmospheric extracts. The result is a good tasting commercial extract of still higher yield. Such increased yield represents a significant economic advantage for a commercial coffee operation. Either combination from above may be dried in one of the conventional manners, providing a superior soluble coffee.

Best Mode For Carrying Out The Invention

The following example more fully illustrates the invention.

1.0 ml. of hydrolyzed coffee extract having 4.5% by weight hydrolysis coffee solids was placed in a column (0.7 cm. x 20 cm.) charged with about 5 gm. of porous polyacrylamide polymer resin and the hydrolyzed coffee extract was fully adsorbed. The resin was Bio-Gel P-2 available from Bio Rad Laboratories, Richmond, California. The bed of resin was then washed with deionized water whereupon 2 bands became visible: the first was brown representing the upgraded hydrolyzed coffee solids and the second was yellow, being the off-flavored compounds. Continued washing completely flushed the brown band from the column which band was collected as the upgraded hydrolyzed coffee extract. The yellow band was subsequently flushed from the column by additional washing. The flushed yellow band was tasted and found to contain the undesirable off-flavor compounds.

0078650

Claims:

1.    A process for removing the undesirable off-flavor compounds from a hydrolysis coffee extract which comprises contacting said extract with a porous polyacrylamide polymer resin.

2.    The process of Claim 1 wherein the porous polyacrylamide polymer resin is in the form of granules, which granules are not retained on a 50 mesh (U.S. Standard Sieve Screen) but which granules are retained on a 400 mesh.

3.    The process of Claim 1 wherein the contact between the hydrolyzed coffee extract and the resin is carried out by passing said hydrolysis extract downward through a bed of said resin packed in a column, which column has a length between 10 and 50 times the width.

4.    The process of Claim 3 which further comprises recovering the upgraded hydrolysis extract by passing water downward through said resin bed subsequent to contact with the hydrolysis extract, to elute the adsorbed upgraded hydrolysis extract.

5.    The process of Claim 1 wherein the contact between the hydrolyzed coffee extract and the resin is carried out at a temperature of from 4°C to 80°C.

6.    The process of Claim 1 wherein the weight ratio of hydrolyzed coffee solids to the weight of resin ranges between .01 kg. hydrolysis solids/1 kg. resin and .1 kg. hydrolysis solids/1 kg. resin.

7.    The process of Claim 1 wherein the concentration of the hydrolysis extract is from 1% by weight hydrolysis solids to 10% by weight hydrolysis solids.

8.    A process for producing a soluble coffee which comprises combining upgraded hydrolysis extract from Claim 1 with atmospheric extract and drying said combination.

0078650

9. A soluble coffee produced from the process of Claim 8.

10. A process for producing a soluble coffee which comprises combining upgraded extract from Claim 1 with conventional commercial coffee extract and drying said combination.

11. A soluble coffee produced from the process of Claim 10.

12. The process of Claim 1 wherein the hydrolysis coffee extract is obtained by the acid hydrolysis of spent coffee grounds.

# EUROPEAN SEARCH REPORT

European Patent Office

Application number

EP 82 30 5656

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | A 23 F 5/18 |
| X,Y | US-A-3 664 845 (H.FRIEDMAN)<br><br>*Claims 1,4; column 1, lines 36-38; example 3* | 1,2,4, 5,7-12 | |
| | --- | | |
| X,Y | FR-A-2 067 182 (HAG)<br>*Claim 1; page 1, line 20; page 2, lines 5-8* | 1-3,7 | |
| | --- | | |
| Y | JOURNAL OF CHROMATOGRAPHY, vol. 53, no. 3, 23rd December 1970, pages 572-573;<br>"The selectivity of polyacrylamide gels for sugars".<br>*page 572* | 2 | |
| | --- | | |
| Y | JOURNAL OF CHROMATOGRAPHY, vol. 47, no. 3, 1970, pages 355-360; C.A.STREULI: "Adsorption chromatography of polar organic molecules on biogel". *Pages 355-357* | 2 | TECHNICAL FIELDS SEARCHED (Int. Cl. ³)<br><br>A 23 F<br>G 01 N |
| | --- | | |
| Y | US-A-2 687 355 (F.BENNER)<br><br>*Claims 1-3; examples I-III; figures 1-3* | 1,3,5, 7-12 | |
| | ----- | | |

The present search report has been drawn up for all claims

| Place of search | Date of completion of the search | Examiner |
|---|---|---|
| THE HAGUE | 09-02-1983 | DESMEDT G.R.A. |